# EUROPÄISCHE PATENTSCHRIFT

(11) **EP 1 824 763 B1**
(45) Veröffentlichungstag und Bekanntmachung des Hinweises auf die Patenterteilung: **07.05.2008**
(21) Anmeldenummer: 05823996.3
(22) Anmeldetag: 19.11.2005
(51) Int. Cl.: B65G 21/10, B65G 21/20

(54) **FÖRDEREINRICHTUNG**
CONVEYOR DEVICE
DISPOSITIF DE TRANSPORT

(30) Priorität: 25.11.2004 DE 102004056858
(43) Veröffentlichungstag der Anmeldung: 29.08.2007
(73) Patentinhaber: KRONES AG, 93073 Neutraubling (DE)
(72) Erfinder: GLÖTZL, Reiner, 93080 Pentling (DE)
(86) Internationale Anmeldenummer: PCT/EP2005/012405
(87) Internationale Veröffentlichungsnummer: WO 2006/056372

(56) Entgegenhaltungen:
- WO-A-98/18698
- US-A- 3 581 877
- US-A- 4 225 035

## Beschreibung

Die Erfindung bezieht sich auf eine Fördereinrichtung der im Oberbegriff von Anspruch 1 erläuterten Art.

Bei Fördereinrichtungen ist es oftmals notwendig, das Fördergut mit Hilfe einer Führung auf dem Förderweg zu halten bzw. auf den Förderweg zu leiten. Derartige Führungen weisen eine Leitfläche auf, die entweder laufend am Fördergut anliegt oder sofort mit dem Fördergut in Eingriff tritt, sobald das Fördergut den vorgegebenen Förderweg verlassen will. Ist die Fördereinrichtung jedoch zum Fördern verschieden großer Fördergüter geeignet oder soll dafür eingesetzt werden, so kann eine fest am Förderweg installierte Führung zum Problem werden, insbesondere dann, wenn die Führung laufend mit dem Fördergut in Eingriff stehen muss. Bei einer für Flaschen ausgebildeten Fördereinrichtung ist es bereits bekannt, die Führung auswechselbar auszubilden. Die durch Vorbenutzung bekannte Fördereinrichtung enthält ein Umlenkrad, bevorzugt einen Umlenkstern, durch den sich die Förderrichtung um bevorzugt 180° ändert. Der Umlenkstern ist mit gleichmäßig verteilten, am Umfang offenen Ausnehmungen versehen, die jeweils eine in der ersten Förderrichtung ankommende Flasche aufnehmen und um den 180°-Bogen in die zweite Förderrichtung bringen. Um zu verhindern, dass beispielsweise durch Fliehkräfte die Flaschen im Bogen den Umlenkstern verlassen, ist der Umlenkstern zumindest im Förderbereich mit einem Führungsbogen umgeben, der an den Flaschen außen angreift. Um mit dieser bekannten Fördereinrichtung auch unterschiedlich große Flaschen transportieren zu können, ist die Führung, sowie gegebenenfalls auch der Umlenkstern, auswechselbar, so dass die Fördereinrichtung auf einfache Weise auf unterschiedlich große Flaschen umgerüstet werden kann. Die bekannte Führung ist jedoch einstückig ausgebildet und muss insgesamt ausgewechselt werden. Dabei stellt sich das Problem der Aufbewahrung dieser großen und relativ sperrigen Führung. Darüber hinaus muss die bekannte Führung an mehreren Stellen befestigt werden, um die Führung an der vorbestimmten Stelle fest am Rahmen zu halten.

Eine Fördereinrichtung mit einem Rahmen und einer auswechselbaren und am Rahmen verriegelbaren Führung für ein Fördergut ist aus der WO98/1869A A bekannt.

Der Erfindung liegt demgegenüber die Aufgabe zugrunde, eine Fördereinrichtung mit einer einfach handhabbaren und bequem zu verstauenden auswechselbaren und verriegelbaren Führung zu schaffen.

Die Aufgabe wird durch die im Anspruch 1 angegebenen Merkmale gelöst.

Durch die erfindungsgemäße Ausgestaltung wird eine Führung geschaffen, die sich durch ihre Mehrteiligkeit wesentlich einfacher transportieren und lagern lässt. Obwohl bei der erfindungsgemäßen Führung mehrere Teile montiert werden müssen, wird durch die Zentralverriegelung dafür gesorgt, dass die Montage der mehrteiligen Führung auf keinen Fall langsamer und umständlicher erfolgen muss, als dies bei der einteiligen Führung der Fall ist. Durch die erfindungsgemäße Ausgestaltung ist es ausreichend, nur eines der Führungsteile zu verriegeln, während das andere Führungsteil durch das zentralverriegelte Führungsteil und einen Verriegelungsanschlag gehalten wird.

Vorteilhafte Weiterbildungen der Erfindung sind den Unteransprüchen zu entnehmen.

Zweckmäßigerweise ist der Verriegelungsanschlag Teil einer Positioniereinrichtung, die die exakte Lage des zweiten Führungsteils innerhalb der Fördereinrichtung vorgibt.

Die Montage wird weiter erleichtert, wenn auch am ersten, zentralverriegelten Führungsteil eine Positioniereinrichtung vorgesehen ist.

Wird eine Steck- und Schiebeführung eingesetzt, so wird die Montage noch weiter erleichtert und beschleunigt.

Der Einsatz eines Niederhalters zwischen dem zweiten und bevorzugt auch dem ersten Führungsteil und dem Rahmen erhöht die Sicherheit der Befestigung und verringert die Gefahr, dass Verschmutzungen, beispielsweise Glasbruch oder dgl., zwischen die Führung und den Rahmen gelangen kann.

Ein besonders einfaches und bevorzugtes Ausführungsbeispiel der Steck- und Schiebeführung enthält wenigstens eine Kombination aus einem Bolzen und einer Öffnung, wobei der Bolzen einen Schaft und einen demgegenüber größeren Kopf aufweist und die Öffnung zwei verschieden große Bereiche hat, wobei der Kopf durch den größeren aber nicht durch den kleineren Bereich passt und der kleinere Bereich den Schaft aufnimmt, so dass der Bolzen durch seinen Kopf in Axialrichtung und durch seinen Schaft radial so gesichert ist, dass sich der Schaft in der Öffnung nur in einer Richtung bewegen kann.

Es ist jedoch auch denkbar, dass der Schaft nicht profiliert, sondern im Großen und Ganzen rund ausgebildet ist. Vorzugsweise sind dann die größeren Bereiche der Öffnungen in Richtung des Kraftverlaufs der zu transportierenden Behälter in der Fördereinrichtung angeordnet, um ein Verschieben der Führungsteile auf den Bolzen zu verhindern. Diese Ausführungsform hat den Vorteil, dass die Bolzen durch die unterlassene Profilierung der Schäfte bei der Montage nicht ausgerichtet werden müssen, da sie in jeder Position bis zur Anschlagfläche bewegt werden können.

Zweckmäßigerweise enthält die Öffnung auch den Verriegelungsanschlag, der bevorzugt mit dem Schaft zusammenwirkt.

Die Zentralverriegelung wird bevorzugt durch Klemmen bewirkt, da eine derartige Ausgestaltung relativ einfach herzustellen und zu lösen ist, wobei das Klemmen vorzugsweise durch eine Selbsthemmung der Zentralverriegelung entsteht.

Bevorzugt erfolgt dies durch Verdrehen eines Klemmbolzens mit einem unrunden Klemmbereich in einer Öffnung, die den Klemmbereich radial klemmend aufnimmt.

Wird der Klemmbolzen darüber hinaus mit einem vergrößerten Kopf versehen, so kann dieser, in zusammenwirkung mit einer geeigneten Öffnung, eine Axialsicherung bilden, so dass das erste Führungsteil gegen Bewegung in allen Richtungen gesichert ist.

Die Zentralverriegelung kann aber auch durch andere Elemente wie zum Beispiel einen Rastriegel oder pneumatische, hydraulische oder elektrische Elemente erfolgen.

Zwischen den Führungsteilen sind bevorzugt Druckflächen ausgebildet, die ein direktes und spaltfreies Aneinanderreihen der Führungsteile gestatten und für eine sichere Verriegelung der nur indirekt verriegelten Führungsteile sorgen.

Die Erfindung eignet sich besonders für einen Führungsbogen zum Zusammenwirken mit einem Umlenkrad, kann jedoch auch für andere Einsatzzwecke wie zum Beispiel Linearführungen in Zusammenwirken mit einer Transportschnecke ausgebildet sein.

Sind die Führungsteile mit den Öffnungen und der Rahmen mit den Bolzen versehen, so können einerseits die Bolzen für unterschiedlich große Führungsteile wiederverwendet werden, während die Führungsteile keine vorspringenden Elemente aufweisen, die die Lagerung stören könnten.

Bevorzugt weist der Bolzen eine Auflagefläche für das Führungsteil auf, die es gestattet, das Führungsteil in einem vorbestimmten Abstand zum Rahmen zu montieren, so dass sich darunter Verschmutzungen nicht festsetzen können.

In einer bevorzugten Ausführungsform sind die Führungsteile aus nicht rostendem Stahl hergestellt, um einerseits gute Reinigungseigenschaften und andererseits eine gute Stabilität bei der Einbringung von Öffnungen in die Führungsteile aufzuweisen. Die Öffnungen beschleunigen bzw. ermöglichen das Abfließen von Spritz-, Reinigungs- oder Restflüssigkeit. Solche Führungsteile können dann beispielsweise in aseptischen Maschinen verwendet werden, wo die Anforderungen an das Material und die Konstruktion bezüglich der Keimfreiheit und daher der Reinigungsfähigkeit besonders hoch sind.

Ein Ausführungsbeispiel der Erfindung wird nachfolgend anhand der Zeichnungen näher erläutert. Es zeigen:
- Fig. 1: eine schematische Darstellung einer Draufsicht auf einen Teil einer erfindungsgemäßen Fördereinrichtung,
- Fig. 2: eine Darstellung ähnlich Fig. 1, wobei die Führungsteile nochmals einzeln gezeigt sind, um die Montageschritte zu erläutern,
- Fig. 3: eine schematische Darstellung von Bestandteilen der Zentralverriegelung, wobei Fig. 3A einen Klemmbolzen in Seitenansicht, Fig. 3B den Klemmbolzen in Vorderansicht, Fig. 3C den Schnitt III - III aus Fig. 3A und Fig. 3D die Öffnung der Zentralverriegelung zeigt, und
- Fig. 4: die Bestandteile einer Steck- und Schiebeführung, wobei Fig. 4A eine Seitenansicht des Bolzens, Fig. 4B den Schnitt IV - IV und Fig. 4C die zugehörige Öffnung zeigt.

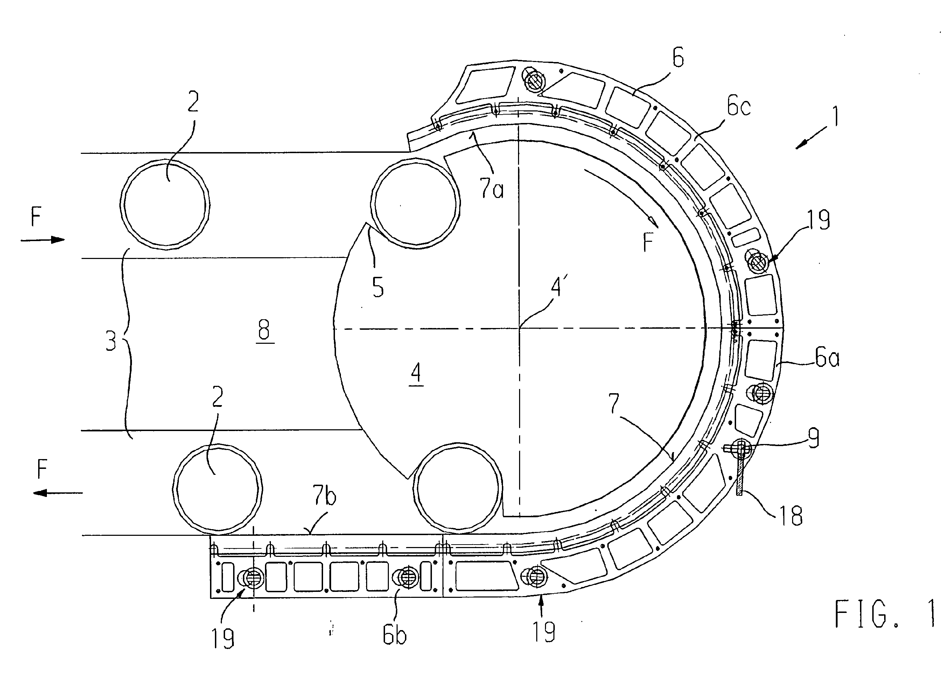

Fig. 1 zeigt in schematischer Darstellung einen erfindungsgemäß ausgebildeten Teil eines Ausführungsbeispiels einer Fördereinrichtung 1 zum Fördern von Fördergut. Im dargestellten Ausführungsbeispiel ist die Fördereinrichtung 1 zum Fördern von Behältern 2 für Getränke, insbesondere von Flaschen ausgebildet. Die Behälter 2 werden durch einen geeigneten Förderer, dargestellt ist ein Förderband 3, in Förderrichtung F angeliefert. Zur Ausführung einer Änderung der Förderrichtung läuft der Förderer 3 in den Bereich eines Umlenkrades 4 ein, das im dargestellten Ausführungsbeispiel als Umlenkstern ausgebildet ist und eine Vielzahl von umfangsseitig offenen Ausnehmungen 5 aufweist, die so bemessen sind, dass sie den Behälter 2 an irgendeiner geeigneten Stelle entlang der Längsachse des Behälters führend aufnehmen, ihn um den gewünschten Bogen transportieren und an der geeigneten Stelle wieder abgeben, beispielsweise wiederum auf einen Förderer 3 in Form eines Förderbandes. Im dargestellten Ausführungsbeispiel sind nur zwei Ausnehmungen 5 gezeigt, es ist jedoch klar, dass das Umlenkrad 4 eine Vielzahl gleichmäßig um den Umfang verteilt angeordnete Ausnehmungen 5 aufweist.

Um zu verhindern, dass der Behälter 2 die Ausnehmungen 5 vorzeitig verlässt, ist eine insgesamt mit 6 bezeichnete Führung vorgesehen. Die Führung 6 ist als Führungsbogen ausgebildet und enthält eine Leitfläche 7, die sich über einen vorbestimmten Winkelbereich um das Umlenkrad 4 herum erstreckt, koaxial mit der Drehachse 4' gekrümmt ist und einen vorbestimmten Abstand zum Umfang des Umlenkrades 4 einhält. Die Leitfläche 7 weist im dargestellten Ausführungsbeispiel einen gekrümmten Bereich 7a auf, der sich über einen Winkelbereich von mehr als 180° erstreckt, und in einen geradlinigen Bereich 7b mündet, der sich an die Auslaufseite des Umlenkrades 4 anschließt. Die Führung 6 ist mit Öffnungen versehen, die einerseits das Gewicht reduzieren und andererseits das Festsetzen von Feuchtigkeit, Bakterien oder dergleichen verhindern.

Die Fördereinrichtung 1 enthält weiterhin einen Rahmen, der hier in Form einer Montagefläche 8 dargestellt ist, und auf dem beispielsweise das Umlenkrad 4 montiert ist.

Die Führung 6 ist mehrteilig ausgebildet und enthält ein erstes Führungsteil 6a, das mit einer Zentralverriegelung 9 versehen ist. Das Führungsteil 6a kann mit Hilfe der Zentralverriegelung 9 aktiv mit dem Rahmen 8 verriegelt werden.

Außer dem ersten, aktiven Führungsteil 6a enthält die Führung 6 wenigstens ein zweites, passiv zu verriegelndes Führungsteil, wobei im dargestellten Ausführungsbeispiel zwei dieser passiven Führungsteile 6b, 6c dargestellt sind. Die passiven Führungsteile 6b, 6c werden über das erste Führungsteil 6a und dessen Zentralverriegelung 9 am Rahmen 8 verriegelt. Jedes der Führungsteile 6a, 6b, 6c ist im Wesentlichen leistenförmig ausgebildet und enthält einen Teil der gemeinsamen Leitfläche 7, wobei die Führungsteile 6a, 6b, 6c so bemessen sind, dass die Leitfläche 7 im Wesentlichen ohne Absatz verläuft.

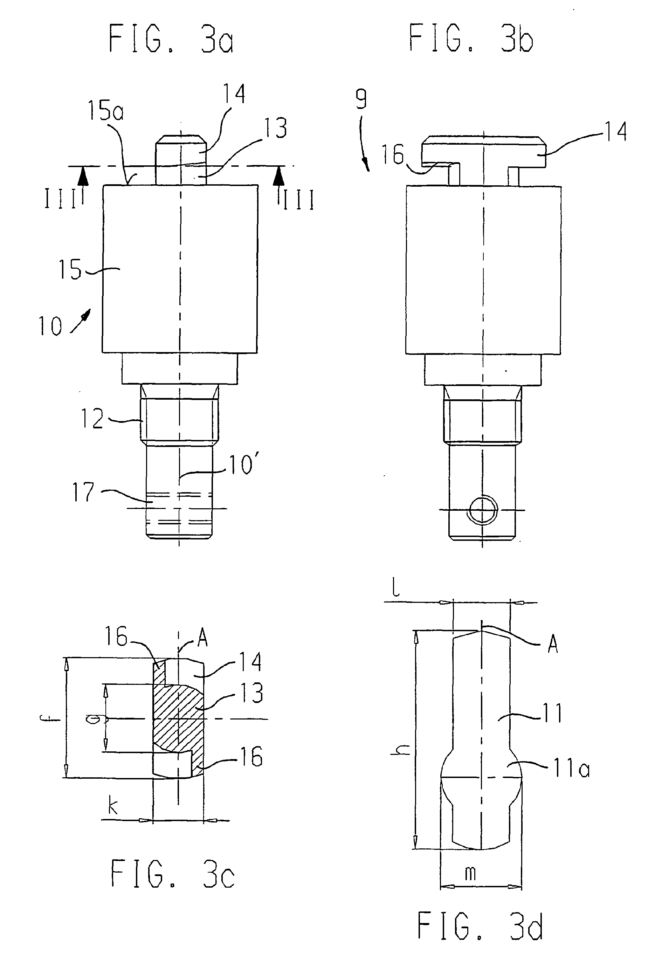

Die Zentralverriegelung 9 ist in Fig. 3 näher dargestellt. Die Zentralverriegelung 9 enthält einen um eine Drehachse 10' verdrehbaren Bolzen 10 und eine zugeordnete Öffnung 11. Im dargestellten Ausführungsbeispiel ist der Bolzen 10 dem Rahmen 8 zugeordnet und bevorzugt über ein Gewinde 12 in diesen eingeschraubt. Die Öffnung 11 ist im Führungsteil 6a vorgesehen.

Der Verriegelungsbolzen 10 enthält ein Klemmteil 13 in Form eines unrunden Bolzenbereichs mit einer ersten, kleineren Abmessung k und einer zweiten, größeren Abmessung g, die bevorzugt rechtwinklig zueinander und jeweils im Wesentlichen symmetrisch zu einer Längsmittellinie oder Achse A verlaufen.

Der Verriegelungsbolzen 10 enthält weiterhin einen gegenüber dem Klemmbereich 13 vergrößerten Kopf 14, der ebenfalls eine kleinere und eine größere Abmessung im Wesentlichen symmetrisch zur Achse A aufweist. Die kleinere Abmessung des Kopfes 14 entspricht der Abmessung k, während die rechtwinklig dazu verlaufende, größere Abmessung f größer ist als die Abmessung g.

Die Abmessungen k, g, f sind so auf die Abmessungen der Öffnung 11 abgestimmt, dass der Kopf 14 mit dem Klemmteil 13 in wenigstens einer Ausrichtung durch die Öffnung 11 gesteckt werden kann, das Klemmteil 13 innerhalb der Öffnung 11 um die Drehachse 10' in eine Klemmstellung verdreht werden kann, und der Kopf 14 in der Klemmstellung nicht mehr durch die Öffnung 11 passt, sondern beidseitig der Öffnung 11 auf dem Führungsteil 6a aufliegt. Zu diesem Zweck weist auch die Öffnung 11 im Wesentlichen symmetrisch zur Achse A eine kleinere Abmessung 1 auf, die gleich oder größer ist als k, aber kleiner als g und f ist, und eine größere Abmessung h auf, die gleich oder größer als f ist. Weiterhin enthält die Öffnung 11 einen erweiterten Bereich 11a zum Erleichtern der Klemmung, mit einer Breite m, die größer als 1 aber kleiner als g ist.

Der Verriegelungsbolzen 10 enthält weiterhin einen als Abstandshalter zum Rahmen 8 wirkenden Auflagebereich 15 mit einer Auflagefläche 15a, die größer ist als der Klemmbereich 13 und an dessen dem Kopf 14 gegenüberliegenden Seite angeordnet ist. Der Kopf 14 weist auf der der Auflagefläche 15a zugewandten Unterseite eine Klemmhilfe 16 in Form eines Klemmkeils oder dgl. auf, der die Reibung vergrößert und eventuelle Dimensionstoleranzen ausgleicht.

Der Verriegelungsbolzen 10 ist weiterhin mit einer Befestigungseinrichtung 17 für eine Handhabe 18 in Form eines Handknebels versehen, die im dargestellten Ausführungsbeispiel als Gewindebohrung zum Einschrauben des Handknebels 18 ausgebildet ist.

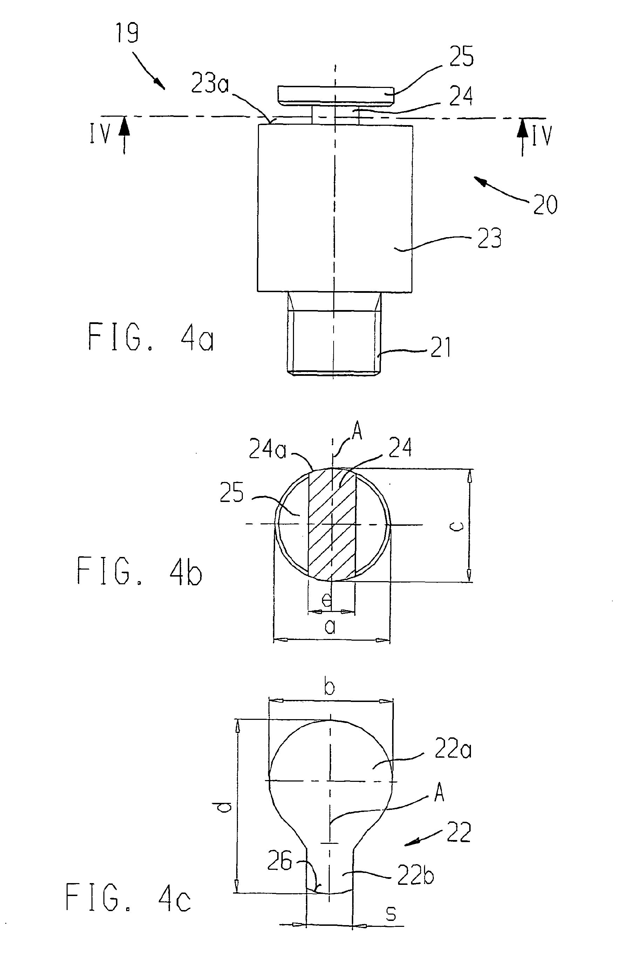

Die erfindungsgemäße Führung 6 enthält weiterhin einen Verriegelungsanschlag, gegen den die passiven Führungsteile 6b, 6c durch das aktive Führungsteil 6a gedrückt werden. Die erfindungsgemäße Führung 6 enthält weiterhin eine Positioniereinrichtung, die die vorbestimmte Position einiger oder aller Führungsteile untereinander und bezüglich des Rahmens vorgibt. Weiterhin enthält die erfindungsgemäße Führung 6 eine Niederhalteeinrichtung, die die Führung 6 gegen den Rahmen drückt. Alle diese Funktionen werden im dargestellten Ausführungsbeispiel durch die anhand Fig. 4 näher erläuterte Steck- und Schiebeverbindung 19 erfüllt.

Die Steck- und Schiebeverbindung 19 enthält einen Bolzen 20, der im dargestellten Ausführungsbeispiel dem Rahmen 8 zugeordnet ist und bevorzugt über ein Gewinde 21 in diesen eingeschraubt ist, und eine Öffnung 22, die in der Führung 6 vorgesehen ist.

Der Bolzen 20 enthält einen Auflagebereich 23 mit einer oberen Auflagefläche 23a, deren Funktion dem Auflagebereich 15 entspricht, einen kleineren Schaftbereich 24 und einen demgegenüber größeren Kopf 25. Die Öffnung 22 ist im Wesentlichen schlüssellochförmig mit einem weiteren Bereich 22a und einem engeren Bereich 22b im Wesentlichen symmetrisch zur Achse A ausgebildet und so bemessen, dass der Kopf 25 durch den weiteren Bereich 22a, jedoch nicht durch den engeren Bereich 22b passt, während der Schaftbereich 24 im engeren Bereich 22b aufgenommen wird. Auch hier sind wiederum die Bereiche 22a und 22b entlang der Achse A ausgerichtet.

Insbesondere weist der Kopf 25 einen im Wesentlichen kreisförmigen Querschnitt mit einem Durchmesser a auf, der kleiner oder gleich einem Durchmesser b des weiteren Bereichs 22a ist, der ebenfalls bevorzugt kreisförmig ausgebildet ist. Der Schaftbereich 24 hat eine erste, größere Abmessung c, die etwa dem Durchmesser a entspricht und kleineer ist als die Länge d der Öffnung 22 entlang der Achse A, und eine zweite, kleinere Abmessung e quer zur Achse A, die gleich oder kleiner als die Breite s quer zur Achse A des schmaleren Bereichs 22b der Öffnung 22 ist. Auf diese Weise kann der Bolzen 20 mit seinem Kopf 25 durch den weiteren Bereich 22a der Öffnung 22 gesteckt werden, bis die Anschlagfläche 23a an der Unterseite der Führung 6 anschlägt, wobei beim anschließenden Verschieben der Öffnung 22 entlang der Achse A der Schaftbereich 24 in den engeren Bereich 22b eintreten kann, bis eine Begrenzungsfläche 26 im engeren Bereich 22b, die sich quer zur Achse A erstreckt, an die zugewandte schmale Seite 24a des Schaftbereichs 24 anstößt. Dann liegt der Kopf 25 beidseitig des schmaleren Bereichs 22b der Öffnung 22 auf der Führung 6 auf und dient als Niederhalter.

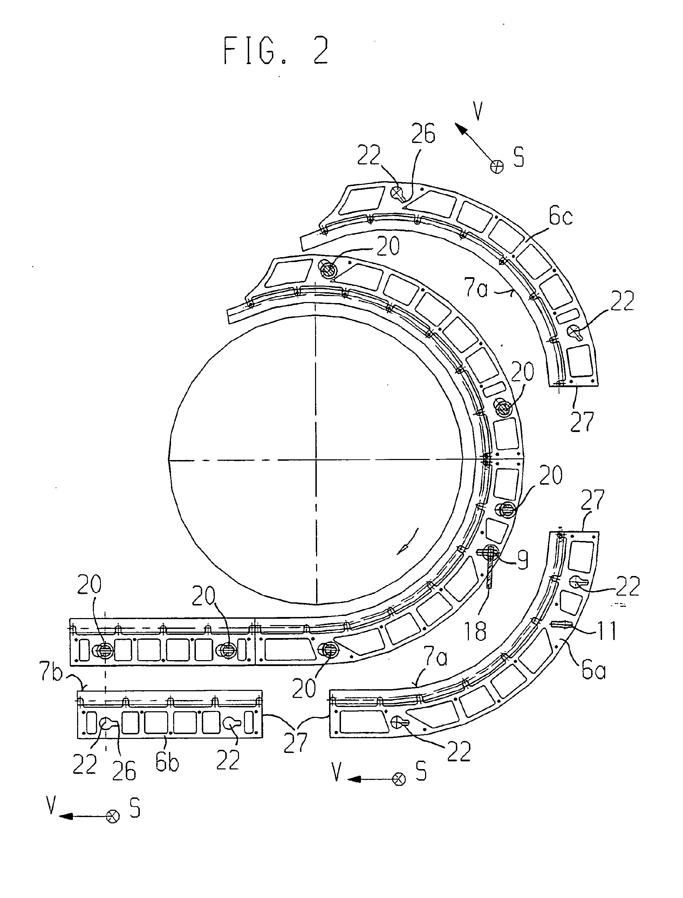

Wie insbesondere in Fig. 2 ersichtlich, enthält jedes der Führungsteile 6a, 6b und 6c bevorzugt wenigstens zwei (Verdrehsicherung) der Öffnungen 22, die mit jeweils einem der Bolzen 20 zusammenwirken, die an der vorbestimmten Position für das entsprechende Führungsteil 6a, 6b, 6c am Rahmen 8 angeordnet sind.

Wie Fig. 2 zeigt, sind die Achsen A aller Öffnungen 22 in jedem Führungsteil 6a, 6b und 6c jeweils in die gleiche Richtung ausgerichtet. Dabei fluchten die Achsen A im geradlinigen Führungsteil 6b, und verlaufen parallel zueinander in jedem der gekrümmten Führungsteile 6a, 6c. Die Öffnungen 22 sind weiterhin so ausgerichtet, dass die engeren Bereiche 22b innerhalb jedes Führungsteils 6a, 6b und 6c in die gleiche Richtung weisen. Auch die Achse A der Öffnung 11 der Zentralverriegelung 9 im aktiven Führungsteil 6a verläuft parallel zu den Achsen A der Öffnungen 22 in diesem Führungsteil 6a.

Die Bolzen 10 und 20 und die zugeordnete Öffnungen 11 und 22 bilden somit eine Steck- und Schiebeverbindung 19 für jedes der damit versehenen Führungsteile.

Zur Montage der Führung 6 werden zunächst die beiden passiven Führungsteile 6b und 6c in Richtung des Pfeils S senkrecht zur Fig. 2 mit ihren Öffnungen 22 auf die Bolzen 20 gesteckt und dann in einer Richtung V parallel zur Ebene der Fig. 2 so weit entlang ihrer Achse A verschoben, bis das jeweilige, passive Führungsteil an einem Verriegelungsanschlag anschlägt, der im dargestellten Ausführungsbeispiel durch die quer zur Achse A verlaufende Anschlagfläche 26 wenigstens einer der Öffnungen 22 in jedem Führungsteil 6b, 6c gebildet wird, an die die Endfläche 24a des Schaftes 24 anschlägt. Dabei greift der Kopf 25 des Bolzens 20 beidseitig über den engeren Bereich 22b und wirkt somit als Niederhalter, der das jeweilige Führungsteil 6b, 6c in Anlage an den Auflageflächen 23b des Bolzens 20 und somit am Rahmen 8 hält.

Anschließend wird das aktiv zu verriegelnde Führungsteil 6a montiert, indem es in Richtung des Pfeils S mit seinen Öffnungen 22 auf die entsprechenden Bolzen 20 und mit seiner Öffnung 11 auf den Verriegelungsbolzen 10 aufgesteckt wird, bis die Köpfe 25 und 14 durch die zugeordneten Öffnungen 22 und 11 hindurchgetreten sind. Dann wird auch das aktive Führungsteil 6a in Verschieberichtung V so weit verschoben, bis die Druckflächen 27 aller drei Führungsteile aneinander stoßen und die Leitflächen 7 aller Führungsteile absatzlos miteinander fluchten. Dann wird der verriegelungsbolzen 10 der Zentralverriegelung 9 mit Hilfe des Handgriffs 18 um die Achse 10' verschwenkt, so dass sich das Klemmteil 13 im erweiterten Bereich 11a der Öffnung 11 verklemmt und sich der Kopf 14 mit seinen Klemmkeilen 16 beidseitig der Öffnung 11 auf das Führungsteil 6a auflegt und somit ebenfalls als Niederhalter wirkt. Dadurch wird die aneinandergepresste Position der Druckflächen 27 fixiert und die passiven Führungsteile 6b, 6c durch das aktive Führungsteil 6a verriegelt, d.h. zwischen den Druckflächen 27 und den Verriegelungsanschlägen 26 fixiert.

Aus Fig. 2 ist deutlich zu sehen, dass die Ausrichtung der Achsen A der Öffnungen 22 bzw. 11 so gewählt werden sollte, dass zumindest eine Komponente der vom aktiven Führungsteil 6a ausgeübten Verriegelungskraft gegen den Verriegelungsanschlag 26 wirkt. Weiterhin sollte die Ausrichtung der Achsen A so gewählt werden, dass ein Verschieben des zuletzt zu montierenden Führungsteils, des aktiven Führungsteils 6a, noch möglich ist, obwohl sich die beiden benachbarten Führungsteile 6b, 6c bereits an ihrem Platz befinden. Im vorliegenden Ausführungsbeispiel wird dies dadurch erreicht, dass die Achsen A der Öffnungen 22 des aktiven Führungsteils 6a unter einem unterschiedlichen Winkel zur gebogenen Leitfläche 7a ausgerichtet sind und im Wesentlichen parallel zu den Achsen A der Öffnungen 22 in einem der benachbarten Führungsteile, im dargestellten Ausführungsbeispiel des geradlinigen Führungsteils 6b, verlaufen.

In Abwandlung der beschriebenen und gezeichneten Ausführungsbeispiele können die einzelnen Funktionen des Verriegelungsanschlags, der Positionierung, der Niederhaltung, der Verdrehsicherung und dgl. durch jeweils unterschiedliche konstruktive Elemente bewirkt werden. Die Erfindung ist auch einsetzbar, wenn die Führung nur zwei oder mehr als drei Führungsteile enthält. Als Zentralverriegelung können andere, bekannte Konstruktionen eingesetzt werden, die jedoch bevorzugt ebenfalls eine Schnellklemmung bewirken sollten. Die Erfindung ist außer auf die beschriebenen Führungsbögen für Umlenkräder auch für andere Führungen geeignet, bei denen Fördergüter auf Förderwegen gehalten werden sollen.

## Patentansprüche

1. Fördereinrichtung (1), insbesondere für Flaschen, mit einem Rahmen (8) und einer auswechselbaren und am Rahmen (8) verriegelbaren Führung (6) für ein Fördergut (2), **dadurch gekennzeichnet, dass** die Führung (6) mehrteilig ausgebildet ist, wobei ein erstes Führungsteil (6a) mit einer Zentralverriegelungseinrichtung (9) versehen und als Verriegelungsmittel für ein zweites, mit einem Verriegelungsanschlag (26) versehenes Führungsteil (6b, 6c) ausgebildet ist.

2. Fördereinrichtung nach Anspruch 1, **dadurch gekennzeichnet, dass** zwischen dem zweiten Führungsteil (6b, 6c) und dem Rahmen (8) eine den Verriegelungsanschlag (26) enthaltende Positioniereinrichtung vorgesehen ist.

3. Fördereinrichtung nach Anspruch 1 oder 2, **dadurch gekennzeichnet, dass** zwischen dem ersten Führungsteil (6a) und dem Rahmen (8) eine Positioniereinrichtung vorgesehen ist.

4. Fördereinrichtung nach einem der Ansprüche 1 bis 3, **dadurch gekennzeichnet, dass** zwischen dem Rahmen (8) und der Führung (6) eine Steck- und Schiebeverbindung (19) vorgesehen ist.

5. Fördereinrichtung nach einem der Ansprüche 1 bis 4, **dadurch gekennzeichnet, dass** zwischen dem zweiten Führungsteil (6b, 6c) und dem Rahmen (8) ein Niederhalter (25) vorgesehen ist.

6. Fördereinrichtung nach einem der Ansprüche 1 bis 5, **dadurch gekennzeichnet, dass** zwischen dem ersten Führungsteil (6a) und dem Rahmen (8) ein Niederhalter (14, 25) vorgesehen ist.

7. Fördereinrichtung nach einem der Ansprüche 4 bis 6, **dadurch gekennzeichnet, dass** die Steck- und Schiebeverbindung (19) wenigstens einen Bolzen (20) mit einem Schaft (24) und einem gegenüber dem Schaft (24) größeren, als Niederhalter wirkenden Kopf (25) sowie eine Öffnung (22) enthält, die einen ersten und einen zweiten Bereich (22a, 22b) aufweist, wobei der erste Bereich (22a) größer oder gleich dem Kopf (25) und der zweite Bereich (22b) größer oder gleich dem Schaft (24) aber kleiner als der Kopf (25) ist.

8. Fördereinrichtung nach Anspruch 7, **dadurch gekennzeichnet, dass** der zweite Bereich (22b) der Öffnung (22) mit dem verriegelungsanschlag (26) für den Schaft (24) versehen ist.

9. Fördereinrichtung nach einem der Ansprüche 1 bis 8, **dadurch gekennzeichnet, dass** die Zentralverriegelung (9) ein Klemmteil (13) enthält.

10. Fördereinrichtung nach einem der Ansprüche 1 bis 9, **dadurch gekennzeichnet, dass** die Zentralverriegelung (9) einen um seine Achse (10') verdrehbaren Verriegelungsbolzen (10) mit einem unrunden Klemmbereich (13) und eine Öffnung (11) enthält, die den Klemmbereich (13) radial klemmend aufnimmt.

11. Fördereinrichtung nach Anspruch 10, **dadurch gekennzeichnet, dass** der Verriegelungsbolzen (10) einen gegenüber dem Klemmbereich (13) vergrößerten Kopf (14) enthält, der als Niederhalter wirkt.

12. Fördereinrichtung nach einem der Ansprüche 1 bis 11, **dadurch gekennzeichnet, dass** zwischen den Führungsteilen (6a, 6b, 6c) Druckflächen (27) vorgesehen sind.

13. Fördereinrichtung nach einem der Ansprüche 1 bis 12, **gekennzeichnet durch** eine Ausgestaltung der Führung (6) als Führungsbogen zum Zusammenwirken mit einem Umlenkrad (4) .

14. Fördereinrichtung nach einem der Ansprüche 1 bis 13, **dadurch gekennzeichnet, dass** die Führung (6) als Linearführung ausgestaltet ist, die insbesondere mit einem Gegenstandseinteiler wie einer Transportschnecke zusammenwirkt.

15. Fördereinrichtung nach einem der Ansprüche 1 bis 14, **dadurch gekennzeichnet, dass** das erste und das zweite Führungsteil (6a, 6b, 6c) jeweils wenigstens zwei Öffnungen (22) aufweist, und der Rahmen (8) zugeordnete Bolzen (20) mit einem als Positioniereinrichtung wirkenden Schaft (24) und einen als Niederhalter wirkenden Kopf (25) einer Steck- und Schiebeführung (20, 22) enthält.

16. Fördereinrichtung nach einem der Ansprüche 7 bis 15, **dadurch gekennzeichnet, dass** der Bolzen (10, 20) eine Auflagefläche (15a, 23a) aufweist.

## Claims

1. Conveyor device (1), especially for bottles, having a frame (8) and a guide (6) for material (2) to be conveyed, the guide (6) being interchangeable and lockable on the frame (8), **characterised in that** the guide (6) is of multi component construction, a first guide component (6a) being provided with a central locking device (9) and constructed as a locking means for a second guide component (6b, 6c) which is provided with a locking stop (26).

2. Conveyor device according to claim 1, **characterised in that** a positioning device that includes the locking stop (26) is provided between the second guide component (6b, 6c) and the frame (8).

3. Conveyor device according to claim 1 or 2, **characterised in that** a positioning device is provided between the first guide component (6a) and the frame (8).

4. Conveyor device according to one of claims 1 to 3, **characterised in that** an insert and slide connection (19) is provided between the frame (8) and the guide (6).

5. Conveyor device according to one of claims 1 to 4, **characterised in that** a hold down means (25) is provided between the second guide component (6b, 6c) and the frame (8).

6. Conveyor device according to one of claims 1 to 5, **characterised in that** a hold down means (14, 25) is provided between the first guide component (6a) and the frame (8).

7. Conveyor device according to one of claims 4 to 6, **characterised in that** the insert and slide connection (19) includes at least one bolt (20) with a shank (24) and a head (25) which is larger than the shank and acts as hold down means and also includes an aperture (22) which has a first and a second section (22a, 22b), the first section (22a) being larger than or equal to the head (25) and the second section (22b) being larger than or equal to the shank (24) but smaller than the head (25).

8. Conveyor device according to claim 7, **characterised in that** the second section (22b) of the aperture (22) is provided with the locking stop (26) for the shank (24).

9. Conveyor device according to one of claims 1 to 8, **characterised in that** the central locking (9) includes a clamping element (13).

10. Conveyor device according to one of claims 1 to 9, **characterised in that** the central locking device (9) includes a locking bolt (10) rotatable about its axis (10') and having a non-circular clamping region (13) and includes an aperture (11) which receives the clamping region (13) for radial clamping.

11. Conveyor device according to claim 10, **characterised in that** the locking bolt (10) includes a head (14) which is enlarged as against the clamping region (13) and acts as a hold down means.

12. Conveyor device according to one of claims 1 to 11, **characterised in that** pressure surfaces (27) are provided between the guide components (6a, 6b, 6c).

13. Conveyor device according to one of claims 1 to 12, **characterised by** a realization of the guide (6) as an arcuate guide for cooperation with a diverter wheel (4).

14. Conveyor device according to one of claims 1 to 13, **characterised in that** the guide (6) is constructed as a linear guide which cooperates especially with an item divider such as a conveyor screw.

15. Conveyor device according to one of claims 1 to 14, **characterised in that** the first and the second guide component (6a, 6b, 6c) each has at least two apertures (22), and the frame (8) includes associated bolts (20) with a shaft (24) acting as a positioning device and includes a head (25) of an insert and slide connection (20, 22), the head (25) acting as hold down means.

16. Conveyor device according to one of claims 7 to 15, **characterised in that** the bolt (10, 20) has a support surface (15a, 23a).

## Revendications

1. Installation de transport (1), notamment pour des bouteilles, comportant un châssis (11) et un guide (6) remplaçable, verrouillé au châssis (8) pour un produit à transporter,
**caractérisée en ce que**
le guide (6) est formé de plusieurs parties,
une première partie de guide (6a) est munie d'une installation de verrouillage central (9) et elle est réalisée comme moyen de verrouillage pour une seconde partie de guidage (6b, 6c) munie d'une butée de verrouillage (26).

2. Installation de transport selon la revendication 1,
**caractérisée par**
une installation de positionnement comportant la butée de verrouillage (26) entre la seconde partie de guide (6b, 6c) et le châssis (8).

3. Installation de transport selon les revendications 1 ou 2,
**caractérisée par**
une installation de positionnement entre la première partie de guide (6a) et le châssis (8).

4. Installation de transport selon l'une des revendications 1 à 3,
**caractérisée par**
une liaison par enfichage et coulissement (19) entre le châssis (8) et le guide (6).

5. Installation de transport selon l'une des revendications 1 à 4,
**caractérisée par**
un serre-flan (25) entre la seconde partie de guide (6b, 6c) et le châssis (8).

6. Installation de transport selon l'une des revendications 1 à 5,
**caractérisée par**
un serre-flan (14, 25) entre la première partie de guide (6a) et le châssis (8).

7. Installation de transport selon l'une des revendications 4 à 6,
**caractérisée en ce que**
la liaison par enfichage et coulissement (19) comprend au moins un goujon (20) muni d'un corps (24) et d'une tête (25) plus grande que le corps (24) et fonctionnant comme serre-flan ainsi qu'une ouverture (22) ayant une première zone et une seconde zone (22a, 22b), la première zone (22a) étant plus grande ou égale à la tête (25) et la seconde zone (22b) étant plus grande ou égale au corps (24) mais plus petite que la tête (25).

8. Installation de transport selon la revendication 7,
**caractérisée en ce que**
la seconde zone (22b) de l'ouverture (22) est munie d'une butée de verrouillage (26) pour le corps (24).

9. Installation de transport selon l'une des revendications 1 à 8,
**caractérisée en ce que**
le verrouillage central (9) comporte une pièce de serrage (13).

10. Installation de transport selon l'une des revendications 1 à 9,
**caractérisée en ce que**
le verrouillage central (9) comporte un goujon de verrouillage (10) qui tourne autour de son axe (10') et présente une zone de serrage non ronde (13) et une ouverture (11) recevant la zone de serrage (13) pour la serrer radialement.

11. Installation de transport selon la revendication 10,
**caractérisée en ce que**
le goujon de verrouillage (10) a une tête (14) agrandie par rapport à la zone de serrage (13), cette tête fonctionnant comme serre-flan.

12. Installation de transport selon l'une des revendications 1 à 11,
**caractérisée par**
des surfaces de pression (27) entre les pièces de guidage (6a, 6b, 6c).

13. Installation de transport selon l'une des revendications 1 à 12,
**caractérisée par**
une réalisation du guide (6) comme arc de guidage pour coopérer avec une roue de renvoi (4).

14. Installation de transport selon l'une des revendications 1 à 13,
**caractérisée en ce que**
le guide (6) est un guide linéaire coopérant notamment avec un séparateur d'objet tel qu'une vis transporteuse.

15. Installation de transport selon l'une des revendications 1 à 14,
**caractérisée en ce que**
la première et la seconde partie de guide (6a, 6b, 6c) comportent chacune au moins deux orifices (22) et le goujon (20) associé au châssis (8) a un corps (24) fonctionnant comme installation de positionnement ainsi qu'une tête (25) fonctionnant comme serre-flan d'un guide par enfichage et coulissement (20, 22).

16. Installation de transport selon l'une des revendications 7 à 15,
**caractérisée en ce que**
le goujon (10, 20) présente une surface d'appui (15a, 23a).
